Europäisches Patentamt

European Patent Office

Office européen des brevets

(11) Publication number: **0 229 379**
**A2**

(12) **EUROPEAN PATENT APPLICATION**

(21) Application number: **86117957.0**

(51) Int. Cl.⁴: **H04N 1/417**

(22) Date of filing: **23.12.86**

The title of the invention has been amended (Guidelines for Examination in the EPO, A-III, 7.3).

(30) Priority: **23.12.85 JP 289570/85**

(43) Date of publication of application:
**22.07.87 Bulletin 87/30**

(84) Designated Contracting States:
**DE FR GB**

(71) Applicant: **NEC CORPORATION**
**33-1, Shiba 5-chome, Minato-ku**
**Tokyo 108(JP)**

(72) Inventor: **Kurokawa, Hidefumi c/o NEC**
**Corporation**
**33-1, Shiba 5-chome**
**Minato-ku Tokyo(JP)**

(74) Representative: **Glawe, Delfs, Moll & Partner**
**Patentanwälte**
**Postfach 26 01 62 Liebherrstrasse 20**
**D-8000 München 26(DE)**

(54) **Digital picture signal coding/decoding circuit.**

(57) A digital signal coding/decoding circuit for coding/decoding digital signals by means of MR coding/decoding algorithm has an MR coding/decoding means, a line buffer temporarily storing reference digital signals which have been already coded or decoded, and a preparation circuit producing a compression code and expanding the compression code into the reference digital signals. The line buffer stores compression codes temporarily.

FIG. 3      200

# DIGITAL SIGNAL CODING/DECODING CIRCUIT

## BACKGROUND OF THE INVENTION

The present invention relates to a digital signal coding/decoding circuit and particularly to a preparation circuit for coding/decoding of a digital signal, such as a two level (white and black) facsimile signal.

Heretofore, two coding/decoding systems have been recommended by CCITT for efficient transmission of a facsimile signal; one is MH (Modified Huffman) system making 1-dimensional coding/decoding and the other is MR (Modified Read) system with 2-dimensional coding/decoding. The latter is dominantly used because of its higher transmission efficiency. The MR coding/decoding requires a memory means for adjacent two scanning lines, that is, a scanning line to be coded or decoded and a previous scanning line which has been previously coded or decoded. To hold the previous scanning line, a line buffer for temporarily storing the previous scanning line is used. The stored scanning line is used as a reference line for coding or decoding a successive scanning line.

Further, if an image to be transferred is scanned with a high-resolution, digital information per one line increases in number. Therefore, a memory with a large capacity is required as the line buffer. For example, in the case of 16 scanning signals per 1 mm, 3456 bits per one line must be coded in A4 size. In a practical use, since a reading operation of a line used as a reference line at a certain timing and a writing operation of a successive line used as a next reference line at a successive-timing are performed substantially simultaneously, two buffer memories are required in the line buffer. Therefore, a conventional coding/decoding circuit needs the line buffer with a large capacity. Consequently, it is hard to form a one-chip semiconductor integrated circuit containing the line buffer together with a cording/decoding unit.

## SUMMARY OF THE INVENTION

An object of the present invention is to provide a coding/decoding circuit in which capacity of a line buffer is reduced.

Another object of the present invention is to provide a coding/decoding circuit which can be formed on a single semiconductor chip.

A coding/decoding circuit of the present invention comprises a coding/decoding means for coding/decoding a plurality of digital signal lines on the basis of MR coding/decoding algorithm, a line buffer temporarily storing information of a line which has been already coded or decoded and is used as a reference line when a successive line is coded or decoded, a compression circuit for producing a compression code of the reference line, and an expansion circuit for expanding the compression code into the reference line. The compression circuit compresses a plurality of digital signals into a first compression code when all of a predetermined number of digital signals are white picture elements and into a second compression code when the predetermined number of digital signals include at least one black picture element. The line buffer stores the first and second compression codes.

According to the present invention, since the reference line is compressed into either the first code or the second code, a capacity of the line buffer is so reduced that the line buffer can be integrated on a single semiconductor chip together with the coding/decoding means and its control means.

## BRIEF DESCRIPTION OF THE DRAWINGS

Fig. 1 illustrates a block diagram of a system to which the present invention can be applied;

Fig. 2 illustrates an internal block diagram of a coding circuit according to a prior art;

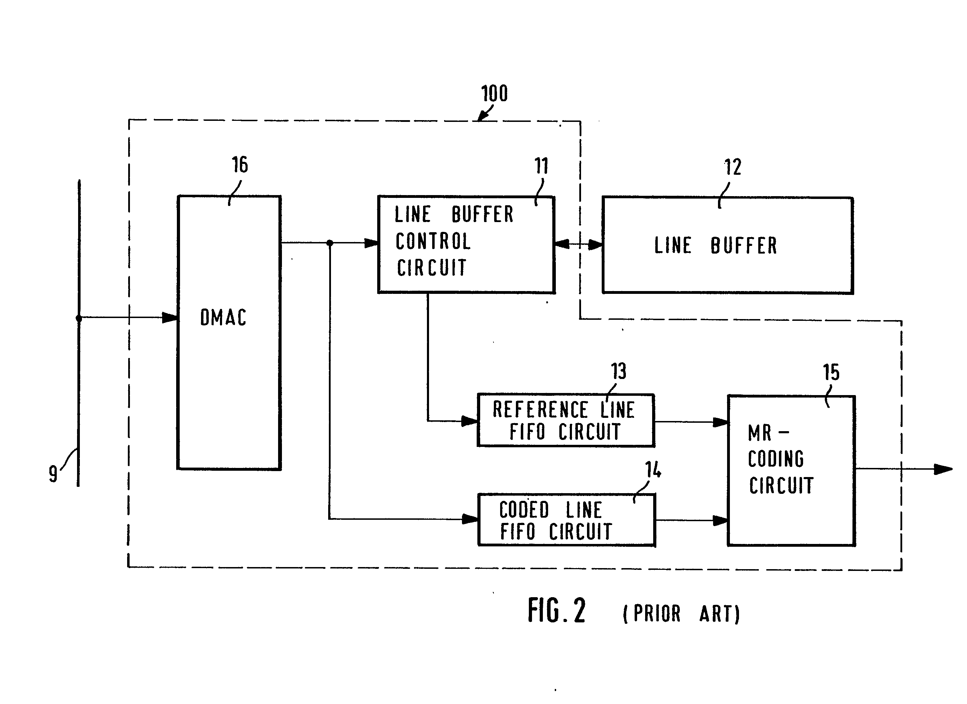

Fig. 2 illustrates an internal block diagram of a coding circuit according to an embodiment of the present invention;

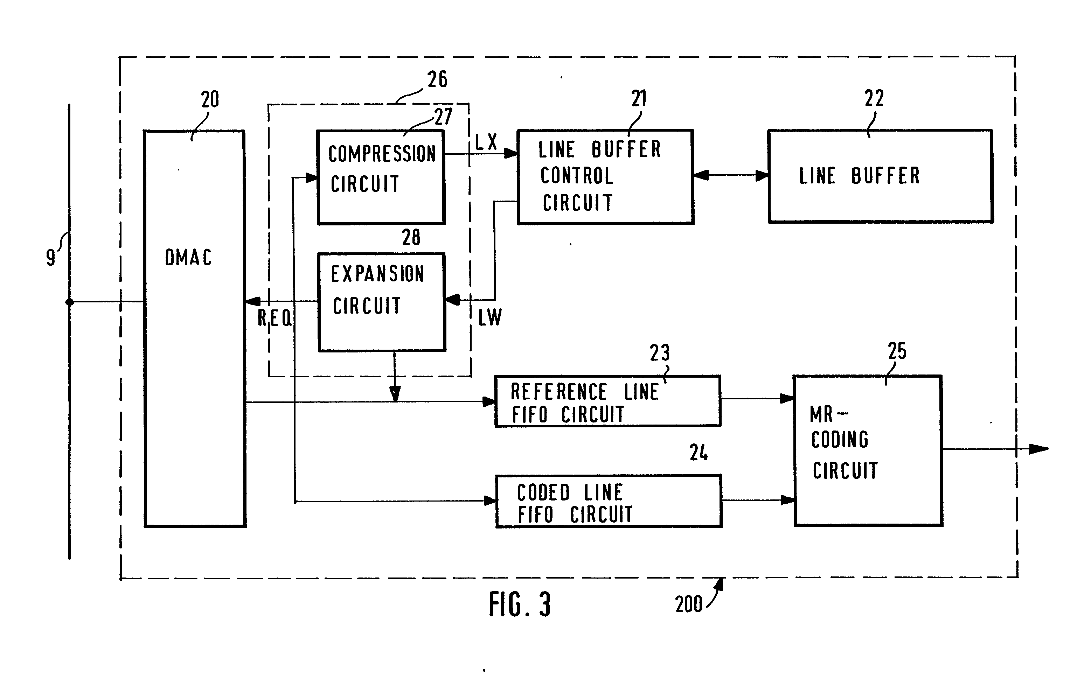

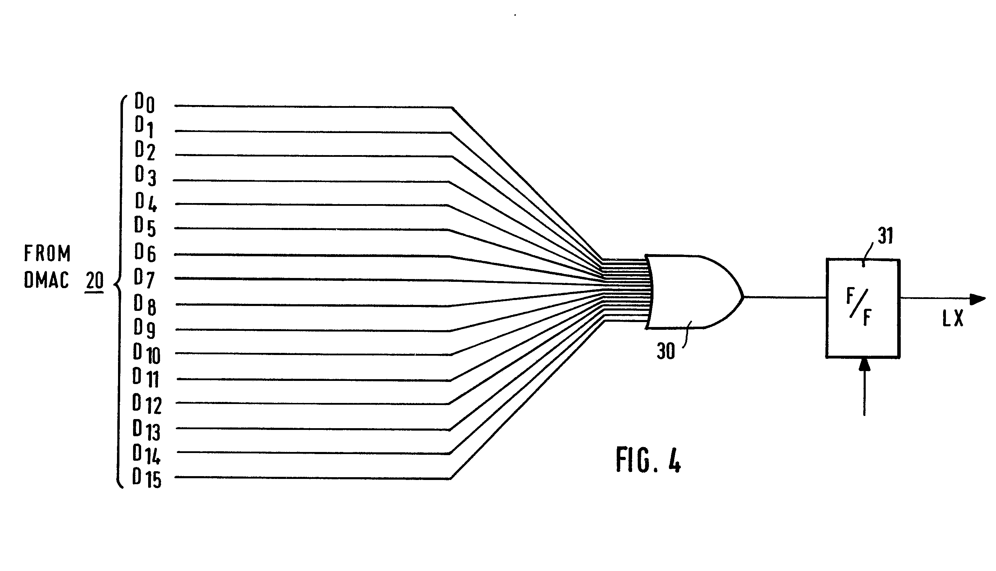

Fig. 4 illustrates a circuit diagram of a compression circuit having a black picture element detecting function of Fig. 3;

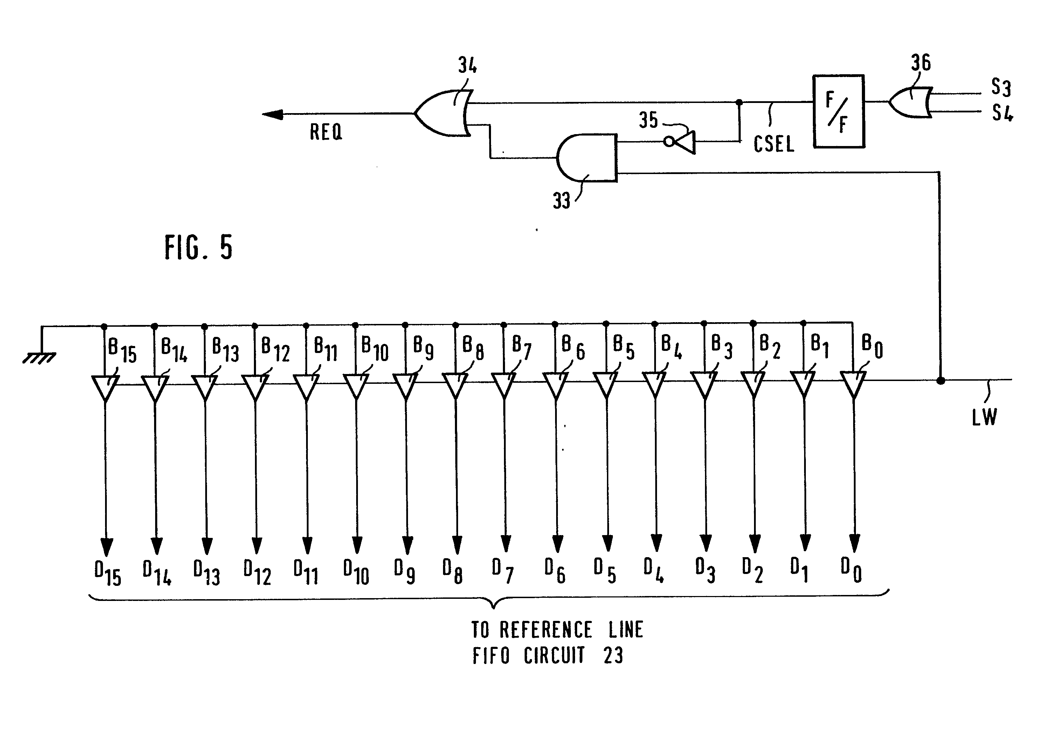

Fig. 5 illustrates a circuit diagram of a expansion circuit having a producing function of white picture element information of Fig. 3;

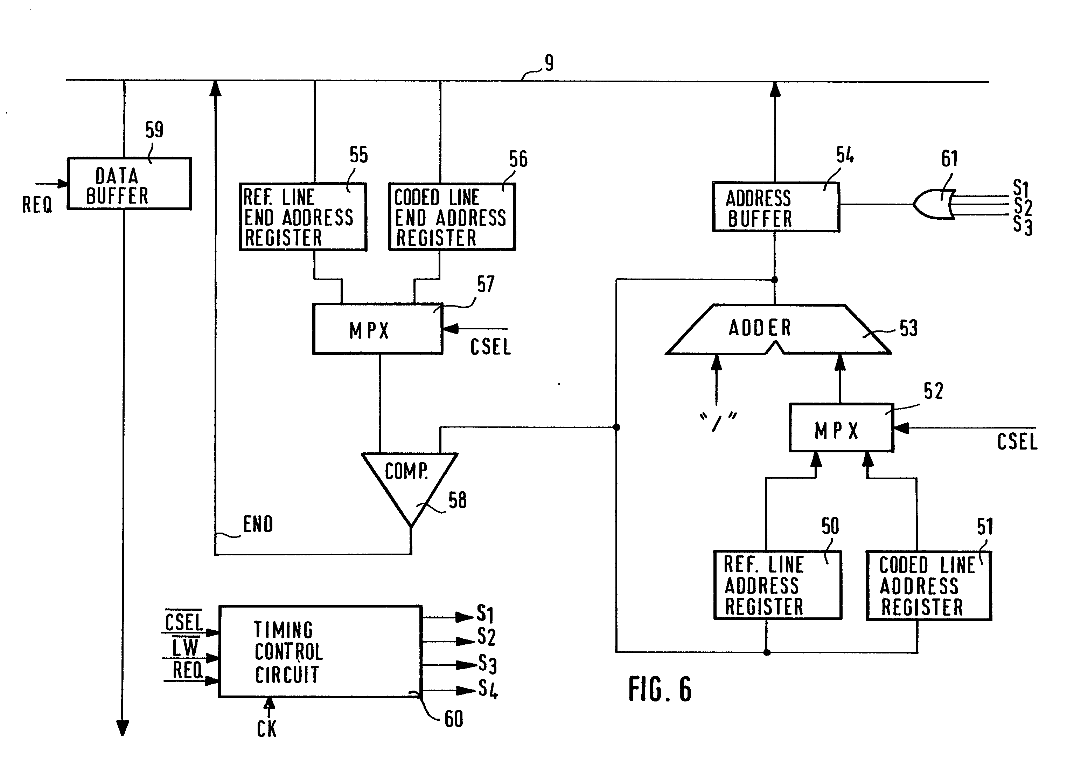

Fig. 6 illustrates internal block diagram of a direct memory access control circuit of Fig. 3;

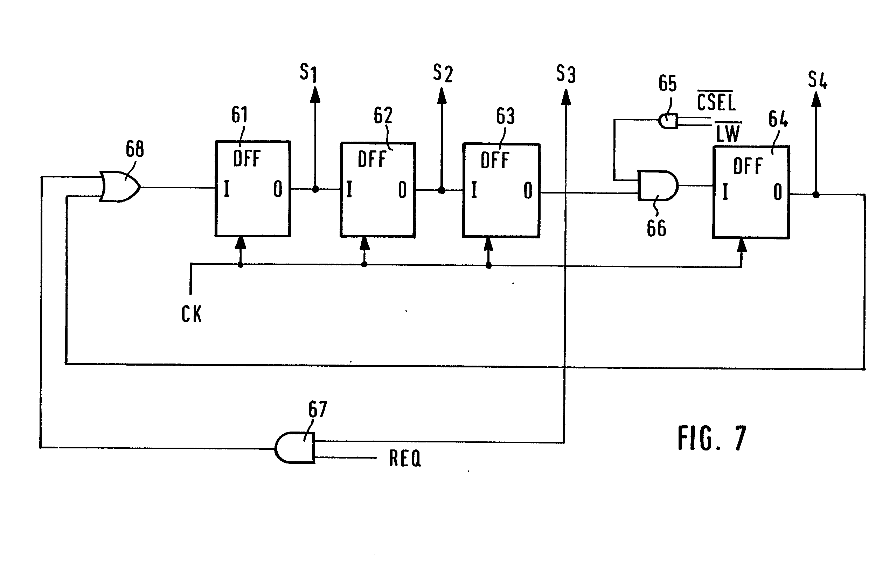

Fig. 7 illustrates a circuit diagram of a timing control circuit of Fig. 6;

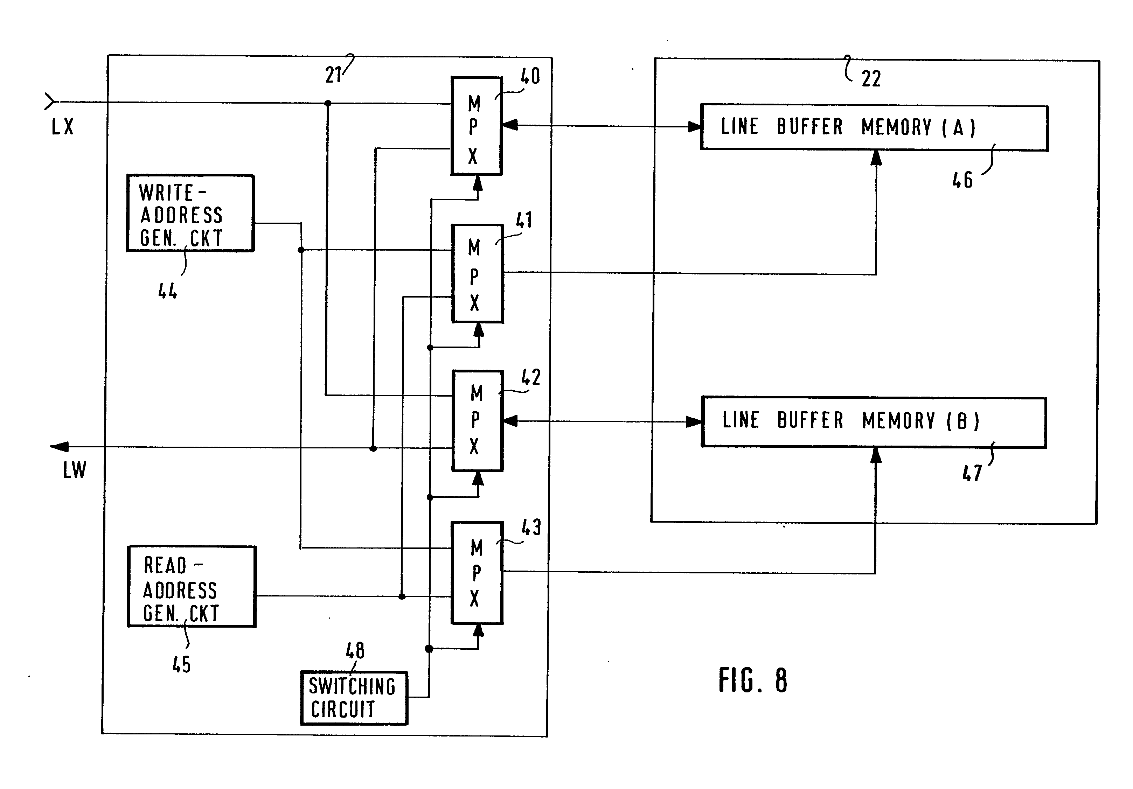

Fig. 8 illustrates internal block diagrams of a line buffer control circuit and a line buffer of Fig. 3;

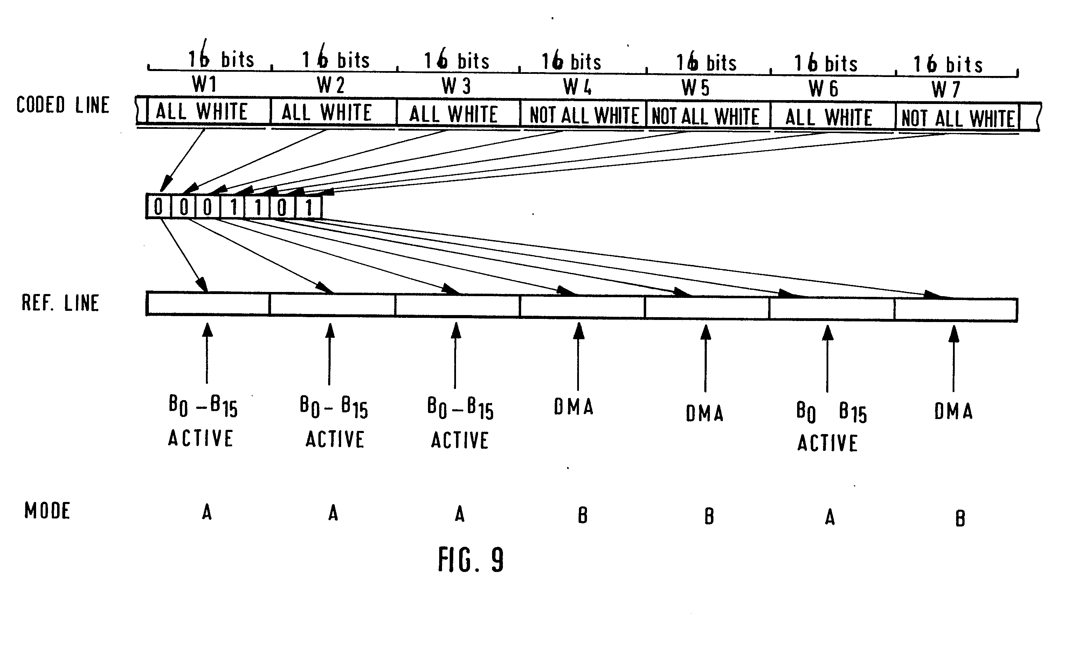

Fig. 9 shows a situation of a compression and an expansion of a reference line;

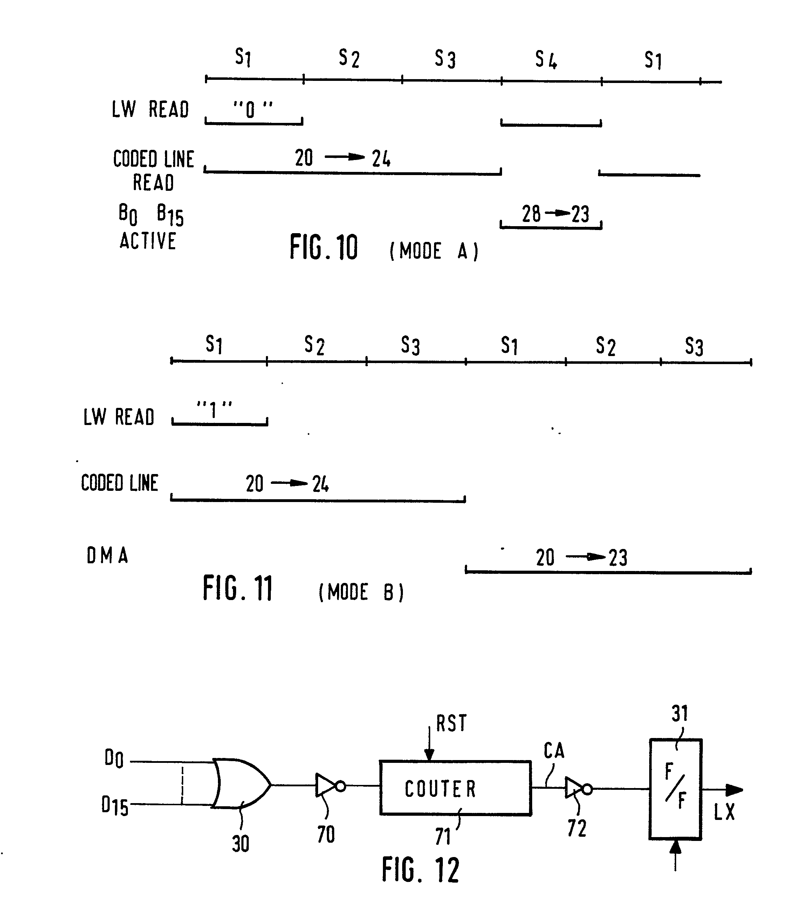

Fig. 10 shows a timing chart of a mode A in which a compressed white code is expanded;

Fig. 11 shows a timing chart of a mode B in which a compressed code including at least one black element is expanded;

Fig. 12 illustrates a circuit diagram of a compression circuit according to another embodiment of the present invention; and

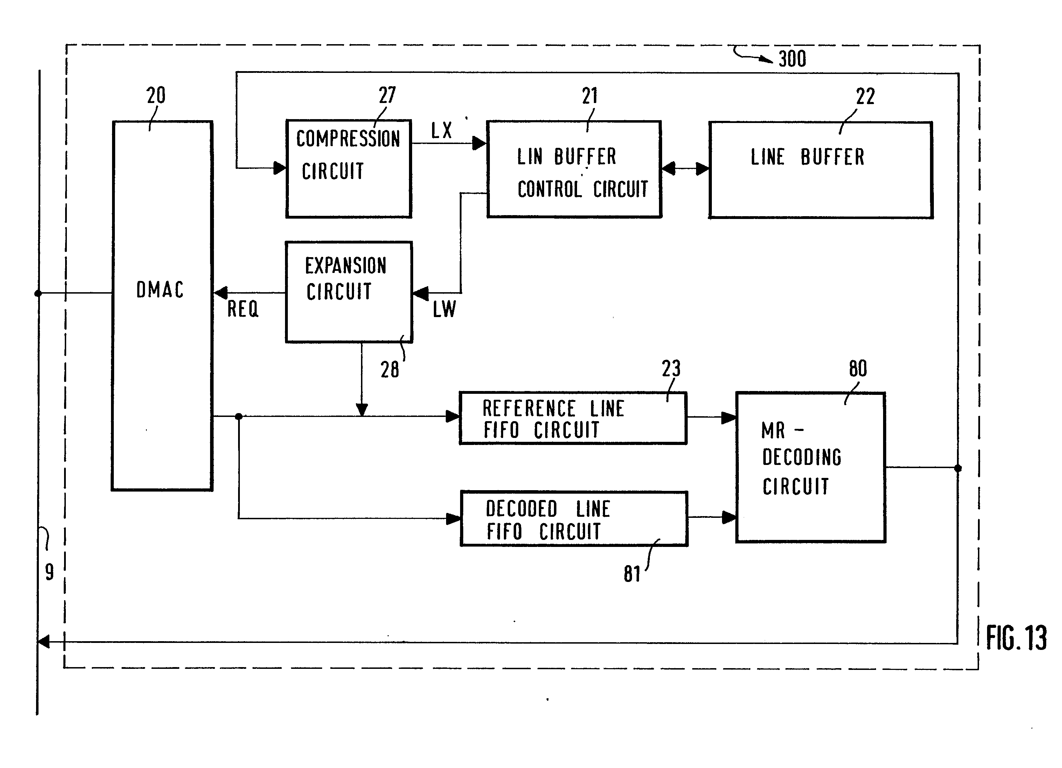

Fig. 13 illustrates an internal block diagram of a decoding circuit according to an embodiment of the present invention.

## DESCRIPTION OF THE PRIOR ART

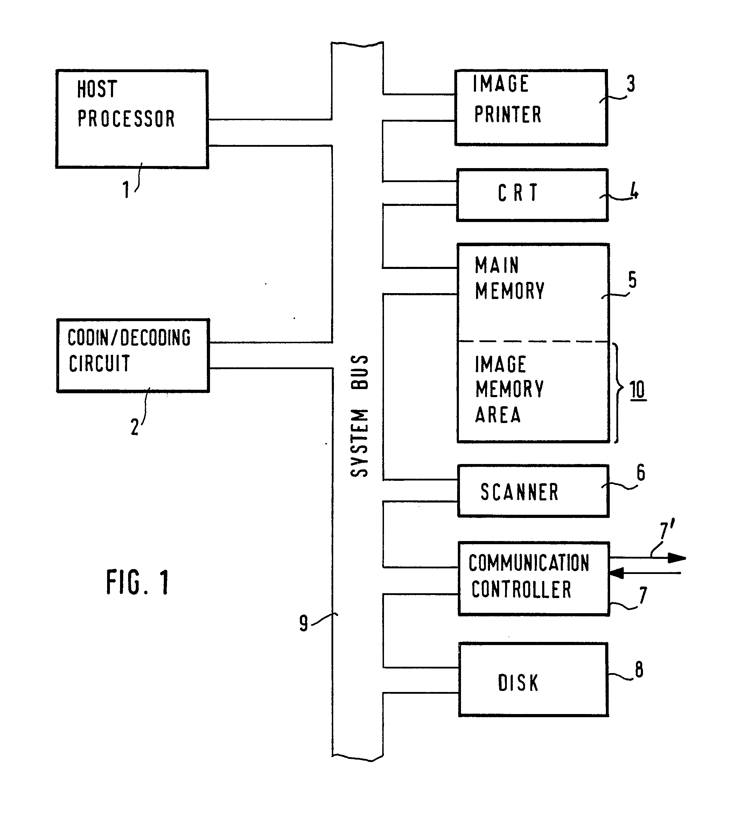

An application system of the present invention is illustrated in Fig. 1. The system involves a host processor 1, a coding/decoding circuit 2, an image printer 3, a CRT display device 4, a main memory 5 having an image memory area 10, a scanner 6, a communication controller 7 having a transmitter and a receiver, and a disk unit 8 which are coupled by a system bus 9 to each other. This system is used as a facsimile machine and/or an image work station.

An image to be transferred is scanned by the scanner 6. If 16 scanning signals per 1 mm are used, facsimile signals of 3456 bits per one line are digitized in A4 size. Since there are 4752 lines in A4 size, $3456 \times 4752 = 16,422,914$ bits are necessary. In this case about 1 M words (16 bit/1 word) are assigned as the image memory area 10 of the main memory. The digitized facsimile signals are written into the image memory area 10 by the host processor 1. A large amount of these facsimile signals are compressed by MR coding. Thereafter the coded signals are transferred through a telephone line 7' under control of the communication controller 7. On the other hand, the coded signals received at the communication controller 7 are decoded into original facsimile signals and are printed out by the image printer 3 or are displayed on a screen of the CRT 4. Further, the decoded facsimile signals may be recorded in the disk unit 8. To code or decode the facsimile signals the coding/decoding circuit 2 is employed.

Fig. 2 illustrates an internal block diagram of the conventional coding circuit which includes a well-known MR coding circuit 15. The MR coding circuit 15 is a two-dimensional coding circuit. The present invention relates to a preparation circuit of the MR coding, so that a detailed explanation with respect to the MR coding circuit will be omitted. In order to code the facsimile signals stored in the image memory area 10 according to MR coding algorithm, adjacent two lines are necessary as described hereinbefore. A line to be coded is transferred word by word via a coding line FIFO (First-In-First-Out) circuit 14 to the MR coding circuit 15, while a reference line is transferred word by word via a reference line FIFO circuit 13 to the MR coding circuit 15. These two lines are read out from the image memory area 10 of the main memory 5. If a reading operation of these two lines is performed by the host processor 1, workload of the host processor 1 is increased. To avoid the host processor's load, a direct memory access controller (DMAC) 16 is employed. The DMAC 16 is coupled to the system bus 9 and applies addresses according to a predetermined order to the main memory 5 to read out each line therefrom. The read out line is transferred to the MR coding circuit 15 by means of DMA transfer. Since two lines are necessary to code one line, two times of DMA transfer are required. Therefore, when N lines are coded, N times of DMA transfer must be performed.

To reduce the number of DMA transfer, a line buffering technology has been proposed. The line buffering technology is based on the view that a line to be coded is used as a reference line when a successive line is coded. According to the coding circuit employing the line buffering technology as shown in Fig. 2, DMAC 16 enters a line to be coded which is read out of the image memory area 10 into the coded line FIFO circuit and enters it into a line buffer control circuit 11 at the same time. The line buffer control circuit 11 has a first address circuit generating a write-address at which the line to be coded is written and a second address circuit generating a read-address from which the line is read out. The line buffer control circuit 11 applies the line transferred from the DMAC 16 to a line buffer 12 together with the write address. The line buffer 12 temporarily stores the line applied from the line buffer control circuit. The stored line is read out of the line buffer 12 according to the read address and is entered into the reference line FIFO circuit 13 when a subsequent line to be coded is entered into the coded line FIFO circuit 14.

As described above, according to the conventional coding circuit, binary information on a line are stored as they are in the line buffer 12, so that the buffer 12 should have a large memory capacity (3456 bits x 2 in the case of A4 size when 1 mm is scanned by 16 scanning signals.) Consequent by, it is difficult to integrate the line buffer 12 on a single semiconductor chip 100 on which the two FIFO circuits 13 and 14, the MR coding circuit 15 and the DMAC 16 are formed.

## DESCRIPTION OF THE PREFERRED EMBODIMENTS

Referring to Fig. 3, an embodiment of the present with respect to a coding circuit will be described. The coding circuit employing MR coding algorithm shown in Fig. 3 comprises a direct memory access controller (DMAC) 20, a line buffer control circuit 21, a line buffer 22, a reference line FIFO circuit 23, a coded line FIFO circuit 24, an MR coding circuit 25 and a preparation circuit 26. The feature of the present invention is in the preparation circuit 26 which has a compression circuit 27 and an expansion circuit 28. By adding the preparation circuit 26, the DMAC 20 and the line buffer control circuit 21 are slightly modified as described hereinafter. However, the reference line FIFO circuit 23, the coded line FIFO circuit 24 and the MR coding circuit 25 may be the same as those in Fig. 2. With respect to the line buffer 22, its capacity can be remarkably reduced.

As shown in Fig. 3, the DMAC 20 is coupled to the system bus 9 for access of the main memory 5 in Fig.1 and is coupled to the reference line FIFO circuit 23, the coded line FIFO circuit 24 and the preparation circuit 26 in common. The compression circuit 27 receives a line to be coded which is entered into the coded line FIFO circuit 24 and compresses the line into a short code (hereinafter called "compression code") LX. The compression code LX is written into the line buffer 22 via the line buffer control circuit 21. The compression code stored in the line buffer 22 is read out and sent to the expansion circuit 28 as a reference code LW by the line buffer control circuit 21. The expansion circuit 28 expands the reference code LW to reproduce the original line by using the DMAC 20. The reproduced line is entered into the reference line FIFO circuit 23 as a reference line, when a successive line to be coded is entered into the coded line FIFO circuit 24, adjacent two lines are applied to the MR coding circuit 25 from the FIFO circuits 23 and 24. The MR coding circuit 25 produces a coded signal of the line in the coded line FIFO circuit 24 with reference to the line in the reference line FIFO circuit 23 according to the MR coding algorithm.

The DMAC 20 can access the image memory area10 of the main memory 5 word by word. When one word is comprised of 16 bits (dots), the DMAC 20 simultaneously read 16 bits out of the image memory area 10 and entered into the compression circuit 27 and the coded line FIFO circuit 24 at the same time. The compression circuit 27 compresses the read out 16 bits into one bit (compression code). That is, if the 16 bits represent all white picture elements, "0" is generated as the compression code. On the other hand, if the 16 bits include at least one black picture element, "1" is generated as the compression code. Thus, the compression circuit 27 compresses 16 bits into one bit. The compressed code is written into the line buffer 22. Consequently, a capacity of the line buffer 22 can be reduced to one-sixteenth. In the case of using 16 scanning signals per 1 mm against an image of A4 size the memory capacity required for the line buffer 22 is only 216 bits. As a result, the line buffer 22 can be integrated on a single semiconductor chip 200 together with the DMAC 20, the preparation circuit 26 and FIFO circuit 23 and 24.

An example of the compression circuit 27 is illustrated in Fig. 4. The illustrated compression circuit comprises an OR gate 30 coupled its 16 input ends to the DMAC 20 and receiving 16 bits $D_0$ -$D_{15}$ in parallel at the 16 input ends, respectively, and a flip-flop 31 coupled its set input end to an output of the OR gate 30. It is assumed that a white picture element is represented by "0" and that a black picture element is represented by "1". When the 16 bits of $D_0$ -$D_{15}$ are all white picture elements, an output of the OR gate 30 becomes "0". The flip-flop 31 is set to "0" and outputs "0" signal as the compression code LX. On the other hand, when at least one black picture element is involved within the 16 bits $D_0$ -$D_{15}$, an output of the OR gate 30 becomes "1", and therefore the flip-flop 31 is set to "1". At this time, "1" signal is outputted as the compression code LX. Thus, 16 bits can be compressed into 1-bit code of "0" or "1". The compression code is written into the line buffer 22 via the line buffer control circuit 21.

The code written into the line buffer 22 must be used as the reference line when a subsequent line is coded. However, the reference line is written into the line buffer 22 in the form of the compression code, so that the compression code read out of the line buffer 22 can not be entered into the reference line FIFO circuit 23 at it is. Therefore, the expansion circuit 28 is provided to expand the compression code into 16-bit signals before compression.

Fig. 5 illustrates a circuit diagram of an example of the expansion circuit 28. The expansion circuit has a white picture element signal generator. In this embodiment, 16-bit white signals ("0" signals) are generated according to the compression code LW read out of the line buffer 22. As shown in Fig. 5, 16 buffers $B_0$ -$B_{15}$ are arranged in parallel. An input end of each buffer is connected to ground (GNP) in common. The compression code LW read out of the line buffer 22 is applied to those 16 buffers $B_0$ -$B_{15}$ in common. The buffers $B_0$ -$B_{15}$ are activated simultaneously when the compression code LW is "0" (low level signal) and generate 16 of "0" signals $D_0$ -$D_{15}$ at the same time. These "0" signals represent 16 bits of white picture elements and are transferred to the reference line FIFO circuit 23. That is, when the LW is "0", 16 bits to be entered into the reference line FIFO circuit 23 are all white signals. Therefore, the expansion circuit 28 produces 16 bits of white signals ("0" signals).

On the other hand, when the LW is "1", the buffers $B_0$ -$B_{15}$ are all activated. At this time, outputs of the buffers $B_0$ - $B_{15}$ become high-impedance states since information to be entered into the reference line FIFO circuit 23 include at least one black picture element. The expansion circuit 28 has a control circuit comprising OR gates 34 and 36, an AND gate 33, an inverter 35 and a T type flip-flop 32. The control circuit receives timing signals S3 and S4 and the compression code LW read out of the line buffer 22 and produces a request signal REQ when the LW is "1". The request signal REQ is applied to the DMAC 20 to indicate that the previous line which has been already coded is required as the reference line. The DMAC 20 read the previous line stored in the image memory area 10 out of the main memory 5 by means of the DMA transfer only when the LW is "1". Thus, the previous line including at least one black picture element is entered into the reference line FIFO circuit 23. The REQ signal is generated when a CSEL signal is "1", or when both the $\overline{CSEL}$ signal and the LW are "1". The CSEL signal is an output signal of the flip-flop 32 whose state is changed whenever either the S3 signal or the S4 signal becomes "1".

An internal block diagram of the DMAC 20 is illustrated in Fig. 6. The DMAC 20 comprises a DMA address generating circuit having a reference line address register 50, a coded line address register 51, a multiplexer 52, an adder 53, and an address buffer 54, a control circuit having a reference line end address register 55, a coded line end address register 56, a multiplexer 57 and a comparator 58, a data transmission circuit having a data buffer 59, and a timing control circuit having a circuit 60. The DMAC 20 has to be able to read both the line to be coded and the line to be used as the reference line out of the image memory area 10. The DMA address generating circuit generates the coded line address and the reference line address alternatively. That is, when the CSEL signal is "1", the coded line address is applied via the MPX 52 from the register 51 to the adder 53 and is added by one. The added coded line address is sent through the system bus 9 to the main memory 5 via the address buffer 54 to read the line to be coded out of the image memory area 10 and is also fed back to the register 51. When the CSEL signal is "0", the reference address is applied via the MPX 52 from the reference address register 50 to the adder 53 and is added by one. The added reference line address is fed back to the register 50. Further this address is sent through the system bus 9 to the main memory 5 to read the reference line out of the image memory area 10 only when the LW signal is "1". The line read out of the main memory 5 is transferred through the system bus 9 to the data buffer 59 which is activated when the REQ signal is "1". When the data buffer 59 is activated, the line to be coded read out of the main memory 5 is entered to the coded line FIFO circuit 26 and the compression circuit 27 and the line to be used as the reference line is entered into the reference line FIFO circuit 23.

The reference line end address and the coded line end address are set by the host processor 1 and are compared with the output of the adder. When the CSEL signal is "1", the coded line end address is compared with the coded line address, while when the CSEL signal is "0", the reference line end address is compared with the reference line address. When a coincidence signal is generated from the comparator 58, the coincidence signal is sent to the host processor 1 as an DMA end signal through the·system bus 9.

The DMA transfer is controlled by timing signals S1 to S4 generated by the timing control circuit 60 in response to the $\overline{CSEL}$ signal, the $\overline{LW}$ signal and the REQ signal. An internal block diagram of the timing control circuit 60 is shown in Fig. 7. The timing control circuit 60 has four delay type flip-flops (DFF)˙61 to 64 which are linked together in this order, and receive a clock CK in common. An output of an OR gate 68 is applied to an input end of the DFF 61. An output of the DFF 61 is the S1 signal and is applied to an input end of the DFF 62 whose output is the S2 signal and is applied to an input end of the DFF 63. An output of the DFF 63 is the S3 signal and is applied to AND gates 66 and 67. The AND gate 66 further receives an output of an AND gate 65 which becomes "1" when the $\overline{CSEL}$ and $\overline{LW}$ signals are both "1". The AND gate 67 becomes "1" when the S3 signal and the REQ signal are both "1". The last DFF 64 receives the output of the AND gate 66 and generates the S4 signal. The S4 signal and the output of the AND gate 67 are fed back to the input of the DFF 61 via the OR gate 68.

The timing control circuit 60 shown in Fig. 7 is set such that the S1 signal is activated when the circuit 60 is initialized by a reset signal. Thereafter the S1 signal and the S2 signal are generated sequentially in this order in response to the clock. A period between S1 to S3 is assigned to perform a DMA transfer, that is either a line to be coded or a line used as a reference line is read out of the main memory 5. Therefore, the address buffer 54 of Fig. 6 is activated by the S1, S2 or S3 signal. When the DMA transfer is required, the S1 to S3 signals are sequentially generated. After the line to be coded is transferred from the main memory 5 to the coded line FIFO circuit 24 and the compression circuit 27, the S4 signal is generated if the compression code LW read out of the line buffer 22 is "0". That is, when the compression code is "0", the expansion circuit 28 produces 16-bit of all white signal, so that the DMA transfer of the reference line is not required. In this case, the $\overline{CSEL}$ signal and the $\overline{LW}$ signal become both "1". Thus the AND gate 66 generates "1" signal. In response to the output of the AND gate 66 the DFF 64 produces the S4 signal. It should be noted that the expansion circuit 28 can generate the 16-bit of white signals within a period determined by only the S4 signal because the DMA transfer is unnecessary. On the other hand, when the compression code read out of the line buffer 22 is "1", the expansion circuit 28 can not produce the reference line. Therefore, the REQ signal is generated to indicate the DMA transfer to the DMAC 20. At this time, since the AND gate 67 becomes "1", the S1 signal is generated after the S3 signal has been generated. The S4 signal is not generated at this time.

Fig. 8 illustrates internal block diagrams of the line buffer control circuit 21 and the line buffer 22 in Fig. 3. The line buffer control circuit 21 has a write address generation circuit 44 and a read address generation circuit 45. The line buffer 22 has two line buffer memories A 46 and B 47. When the compression code LX applied from the compression circuit 27 is written into the line buffer memory A 46 via a multiplexer 40 according to a write address applied to the line buffer memory A 46 via a multiplexer 41, the compression code already stored in the line buffer memory B 47 is read out via a multiplexer 42 as the reference code LW according to a read address applied to the line buffer memory B 47 via a multiplexer 43 and vice versa. Multiplexers 40 to 43 are controlled by a switching control circuit 48. A capacity of each line buffer memory is enough 216 bits, respectively.

Fig. 9 shows compression of a line and expansion of compression codes. In Fig. 9, 1st block to 7th block of a line is illustrated. Each block consists of 16 bits. As shown in Fig. 9, 1st, 2nd, 3rd and 6th blocks are all white picture elements, while 4th, 5th and 7th blocks include at least one black picture element, respectively. Turning to Fig. 3, when the 1st block is read out of the main memory 5, the 1st block is applied to the coded line FIFO circuit 24 and the compression circuit 26. Since this 1st block has all white picture elements, the compression circuit 27 produces a compression code "0". Subsequently, the 2nd and 3rd blocks are compressed into the compression code "0", respectively. With respect to the 4th and 5th blocks, they are compressed into "1", respectively. The 6th block and the 7th block are compressed into "0" and "1", respectively. Thus, 112 bits are compressed into 7 bits. When a successive line is coded, the compression codes are read out of the line buffer 22 and are used to prepare a reference line. As described above, since the 1st, 2nd, 3rd and 6th blocks are compressed into "0", respectively, the expansion circuit 28 produces white picture element signals. In this case, the reference line information corresponding to the 1st, 2nd, 3rd and 6th blocks are produced by the expansion circuit 28 and are entered into the reference line FIFO circuit 23. These operations are executed according to a mode A whose timing is shown in Fig. 10. That is, the compression code is read out of the line buffer 22 in response to the S1 signal and a line to be coded is read out of the main memory 5 in response to the S1 to S3 signal. The compression code is "0", so that the S4 signal is generated. The expansion circuit 28 produces white picture element signals and enters them into the reference line FIFO circuit 23.

Turning to Fig. 9, the compression codes of the 4th, 5th and 7th blocks are "1", and therefore the reference line is produced by a mode B as shown in Fig. 11. According to this mode B, the compression code "1" is read out of the line buffer 22 in response to the S1 signal and the line to be coded is read out of the main memory 5 in response to the S1 to S3 signals. Since the compression code is "1", the timing control circuit 60 does not generated the S4 signal but generated the S1 to S3 signal to allow the DMA transfer. Then, the DMAC 20 reads the reference line information corresponding to the 4th, 5th and 7th blocks out of the main memory 5 and enters them to the reference line FIFO circuit 23.

According to the present embodiment, a capacity of the line buffer can be remarkably reduced. Therefore, the line buffer can be integrated on a single semiconductor chip together with the DMAC, the MR coding circuit, the FIFO circuits and the preparation circuit. Further, since the number of the black picture element is smaller than that of the white picture elements, MR coding can be performed at a high speed.

In Fig. 4, the compression circuit 27 compresses one block consisting of 16 bits into one bit. However, in the case that a plurality of blocks each having all white picture elements continue in an image, the compression circuit can be modified as shown in Fig. 12. In Fig. 12, a counter 71 is inserted between the OR gate 30 and the flip-flop 31. The output of the OR gate 30 is applied to the counter 71 as a count-up signal via an inverter 70. If the counter 71 is a 3-bit up counter, a carry signal CA is generated when continuous 8 blocks are all white picture elements. At this time, "0" is set to the flip-flop 31 via an inverter 72. However, if at least one block includes at least one black picture element, the carry signal CA is not generated. Then, "1" is set to the flip-flop 31. Thus, 16 x 8 = 128 bits are compressed into one bit according to Fig. 12. Therefore, a capacity of the line buffer can be further reduced.

Fig. 13 illustrates another embodiment of the present invention which is applied to MR decoding circuit. A coded signal to be decoded is received to the communication controller 7 and is stored in the main memory 5 line by line by the host processor 1. The stored signal is entered into the MR decoding circuit 80 by the DMAC 20 via the reference line FIFO circuit 23 and the decoded line FIFO circuit 81. The decoded line derived from the MR decoding circuit 80 is written into the image memory area 10 of the main memory 5 and is also transferred to the compression circuit 27. The compression operation is the same operation as that of the coding as shown in Fig. 4 or 12. The decoded line is used as the reference line when the successive line is decoded. The decoded line is compressed into the compression code and is stored in the line buffer 22 through the line buffer control circuit 21. The compression code in the line buffer 22 is read out of the line buffer 22 and is applied to the expansion circuit 28. The expansion operation is the same operation as that of coding as shown in Fig. 5. As shown in Fig. 13, the preparation circuit can be used to MR decoding operation. Thus, the line buffer 22 can be integrated on a single semiconductor chip 300 with the DMAC 20, the line buffer control circuit 21, the compression and expansion circuits 27 and 28, FIFO circuits 23 and 81 and the MR decoding circuit 80.

Further, the present invention can be applied to MMR coding/decoding.

## Claims

1. A digital signal coding/decoding circuit comprising a coding/decoding means for coding/decoding digital signals line by line by using adjacent two digital signal lines, one of said two digital signal lines being used as a line to be coded or decoded, the other of said two digital signal lines being used as a reference line, a first means receiving the reference line for producing an compression code, a line buffer coupled to said first means and temporarily storing the compression code, a second means coupled to said line buffer and expanding the compression code read out of the line buffer to produce a reference line, and an interface circuit coupled to said second means and said coding/decoding means and applying said line to be coded or decoded and said reference line produced by said second means to said coding/decoding means.

2. A circuit as claimed in claim 1, wherein said coding/decoding means, said first and second means and said interface circuit are integrated on a single semiconductor chip.

3. A circuit as claimed in claim 1, wherein said reference line has a plurality of digital signals consisting of white picture elements and black picture elements, said first means producing a first code when a predetermined number of continuous digital signals are all white picture elements and producing a second code different from said first code when said predetermined number of continuous digital signals include at least one black picture element.

4. A circuit as claimed in claim 2, wherein said second means has a means for generating a predetermined number of digital signals representing all white picture elements when said first code is applied thereto and a means for preparing digital signals corresponding to said second code when said second code is applied thereto.

5. A digital signal coding circuit for coding a plurality of digital signal lines stored in a memory comprising a first circuit coupled to said memory and reading a digital signal line out of said memory, a second circuit coupled to said first circuit and compressing a plurality of continuous digital signals into a first code when said plurality of continuous digital signals are all the same signal and compressing a plurality of continuous digital signals into a second code different from said first code when said continuous digital signals include at least one different signal, a third circuit coupled to said second circuit and temporarily storing said first and second codes, a fourth circuit coupled to said first circuit and said third circuit and expanding said first code of said third circuit into the plurality of continuous digital signals having the same signal and generating a request signal according to said second code of said third circuit, said first circuit reading the digital signals corresponding to said second code out of said memory in response to said request signal, a fifth circuit coupled to said first and fourth circuits and receiving either digital signals applied from said first circuit or digital signals applied from said fourth circuit, a sixth circuit coupled to said first circuit and receiving digital signals of a digital signal line to be coded, and a seventh circuit coupled to said fifth and sixth circuits and coding the digital signals of said sixth circuit by using the digital signals of said fifth circuit.

6. A digital signal decoding circuit for decoding a plurality of coded digital signal lines which are stored in a memory comprising a first circuit coupled to said memory and reading a coded digital signal line out of said memory, a second circuit for decoding the coded digital signal line read out of said memory by using digital signals of a previous digital signal line which has been already decoded, a third circuit coupled to said second circuit and compressing a plurality of continuous digital signals in the previous digital signal line into a first code when all of the plurality of continuous digital signals are first signals and into a second code different from said first code when said plurality of continuous digital signals includes at least one second signal different from said first signal, a fourth circuit coupled to said third circuit and temporarily storing the first code and the second code, a fifth circuit coupled to said first circuit and said fourth circuit and expanding said first code into a plurality of continuous digital signals all of which are said first signals and generating a request signal in response to said second code, said first circuit read digital signals corresponding said second code in the previous digital signal line out of a memory in which said previous digital signal line is stored, and a sixth circuit coupled to said first, second and fifth circuits and applying the coded digital signal line and either the digital signals expanded by said fifth circuit or the digital signals read out of the memory by said first circuit to said second circuit.

7. An apparatus for coding/decoding a plurality of digital signal lines, each line consisting of a plurality of facsimile signals each of which represents a white picture element or a black picture element, said apparatus comprising a direct memory access control circuit coupled to a memory in which said plurality of digital signal lines to be coded or decoded are stored, a coding/decoding circuit coupled to said direct memory access control circuit and coding/decoding a digital signal line with reference to a previous digital signal line which has been already coded or decoded, a line buffer temporarily storing the information of the previous digital signal line, and a preparation circuit coupled to said direct memory access control circuit, said coding/decoding circuit and said line buffer, said preparation circuit having a compression circuit which compresses a plurality of facsimile signals of the previous digital signal line into either a first code or a second code, the first code representing that all of a predetermined number of facsimile signals are white picture elements, the second code representing that the predetermined number of facsimile signals include at least one black picture element, said first and second codes being stored in said line buffer, said preparation circuit further having an expansion circuit and a request signal generating circuit, said expansion circuit being enabled by said first code of said line buffer and producing a plurality of white picture element signals, said request signal generating circuit being enabled by said second code of said line buffer and generating a request signal, said direct memory access control circuit reading a plurality of facsimile signals including at least one black picture element corresponding to said second code out of said memory in response to said request signal.

8. A circuit as claimed in claim 7, wherein said direct memory access control circuit, said coding/decoding circuit, said line buffer and said preparation circuit are integrated on a single semiconductor chip.

FIG. 1

FIG.2  (PRIOR ART)

0 229 379

FIG. 3

0 229 379

FIG. 4

FROM
DMAC 20

D0
D1
D2
D3
D4
D5
D6
D7
D8
D9
D10
D11
D12
D13
D14
D15

30

31

F/F

LX

0 229 379

FIG. 5

REQ

34

35

33

CSEL

F/F

36

S3
S4

B_{15} B_{14} B_{13} B_{12} B_{11} B_{10} B_9 B_8 B_7 B_6 B_5 B_4 B_3 B_2 B_1 B_0

LW

D_{15} D_{14} D_{13} D_{12} D_{11} D_{10} D_9 D_8 D_7 D_6 D_5 D_4 D_3 D_2 D_1 D_0

TO REFERENCE LINE
FIFO CIRCUIT 23

0 229 379

FIG. 6

FIG. 7

FIG. 8

LX

LW

WRITE-ADDRESS GEN. CKT 44

READ-ADDRESS GEN. CKT 45

SWITCHING CIRCUIT 48

21

MPX 40

MPX 41

MPX 42

MPX 43

22

LINE BUFFER MEMORY (A) 46

LINE BUFFER MEMORY (B) 47

0 229 379

0 229 379

|  | 16 bits | 16 bits | 16 bits | 16 bits | 16 bits | 16 bits | 16 bits |
|---|---|---|---|---|---|---|---|
|  | W1 | W2 | W3 | W4 | W5 | W6 | W7 |
| CODED LINE | ALL WHITE | ALL WHITE | ALL WHITE | NOT ALL WHITE | NOT ALL WHITE | ALL WHITE | NOT ALL WHITE |

$$\boxed{0}\ \boxed{0}\ \boxed{0}\ \boxed{1}\ \boxed{1}\ \boxed{0}\ \boxed{1}$$

| REF. LINE | | | | | | | |
|---|---|---|---|---|---|---|---|

| | $B_0 - B_{15}$ ACTIVE | $B_0 - B_{15}$ ACTIVE | $B_0 - B_{15}$ ACTIVE | DMA | DMA | $B_0 \quad B_{15}$ ACTIVE | DMA |
|---|---|---|---|---|---|---|---|
| MODE | A | A | A | B | B | A | B |

FIG. 9

FIG.10 (MODE A)

FIG. 11 (MODE B)

FIG. 12

FIG.13

0 229 379